# EUROPEAN PATENT APPLICATION

(11) **EP 1 746 615 A2**
(43) Date of publication of application: **24.01.2007**
(21) Application number: 06253762.6
(22) Date of filing: 18.07.2006
(51) Int. Cl.: H01H 9/22, H01H 21/28, F16P 3/10, H01H 27/00

(54) **Safety switch**

(30) Priority: 20.07.2005 GB 0514869
(71) Applicant: Eja Limited, Hindley Green Industrial Estate, Wigan WN2 4HR (GB)
(72) Inventor: Poyner, Julian, Hazel Grove Stockport SK7 6JS (GB)
(74) Representative: Roberts, Peter David

(57) **Abstract**

A safety switch for a safety circuit, the safety switch comprising a moveable magnet moveably located between a fixed contact and a fixed magnet, a movable contact being fixed to the moveable magnet, wherein the safety switch further comprises coils located adjacent to the moveable magnet, the coils being arranged such that when they are energised they push the moveable magnet towards the fixed contact such that the movable contact presses against the fixed contact, and the fixed magnet being arranged such that when the coils are not energised the moveable magnet and the moveable contact are pulled away from the fixed contact.

## Description

The present invention relates to a safety switch.

Safety switches are well known in the art. For example, a safety switch may comprise a mechanical switch which forms part of a lock on a door that provides access to dangerous electromechanical machinery. An actuator of the lock is arranged such that it makes an electrical contact when the lock is closed, and does not make an electrical contact when the lock is open. The safety switch forms part of a circuit which supplies power to the electromechanical machinery. This means that power may only be supplied to the electromechanical machinery when the lock, and hence the safety switch, is closed. The act of opening the lock in order to open the door will, through mechanical movement of the actuator, break the electrical contact and thus stop the supply of power to the electromechanical machinery.

Mechanical safety switches of this type have been used successfully for some time. However, they suffer from the disadvantage that, since they are mechanically actuated with the lock, they must be located at the lock. It is not always convenient to have a safety switch in such a location. In addition, it is not always convenient to integrate a mechanical actuator with a lock.

A further disadvantage of known mechanical safety switches is that, because they must be located close to electromechanical machinery, they can be affected by vibrations caused by the electromechanical machinery. Some electromechanical machinery can produce quite violent vibrations. These may cause flexing or bending of the mechanical safety switch, which over time may cause contacts of the mechanical safety switch to intermittently be broken. This will cause operation of the electromechanical machinery to be interrupted unnecessarily.

It is on object of the present invention to provide a safety switch which overcomes or substantially mitigates the above disadvantages.

According to the invention there is provided a safety switch for a safety circuit, the safety switch comprising a moveable magnet moveably located between a fixed contact and a fixed magnet, wherein the safety switch further comprises coils located adjacent to the moveable magnet, the coils being arranged such that when they are energised they push the moveable magnet towards the fixed contact such that the movable magnet presses against the fixed contact, and the fixed magnet being arranged such that when the coils are not energised the moveable magnet is pulled away from the fixed contact.

The safety switch according to the invention is advantageous because, since it is not mechanically operated but is instead electrically operated, it does not need to be located at a lock which controls access to electromechanical machinery, but may instead be placed away from the electromechanical machinery. The safety switch does not need to be mechanically coupled to the lock and, because it can be placed away from the electromechanical machinery, can be kept away from harmful vibrations.

The term 'magnet' is intended to include ferromagnetic substances that are not magnetised. One of the fixed magnet and the moveable magnet should be magnetised in order for there to be magnetic attraction between them. However, there is no restriction regarding which of them should be magnetised. It is possible that both the fixed magnet and the moveable magnet are magnetised, although they must be arranged such that there is magnetic attraction between them.

Preferably, the safety switch comprises a block provided with a recess which receives the moveable magnet, the fixed contact and the fixed magnet.

Preferably, the recess is provided with ridges which are arranged to secure the fixed contact and the fixed magnet in place.

Preferably, the recess is dimensioned to allow the moveable magnet to move within the recess.

Preferably, the safety switch further comprises a second moveable magnet, a second fixed contact, a second fixed magnet, and second coils, having the same configuration as above, wherein the safety switch further comprises an arm which connects the first and second moveable contacts.

Preferably, the safety switch further comprises an auxiliary contact which is mechanically connected to the arm, and which is moveable between a first configuration in which a contact is made and a second configuration in which no contact is made.

Preferably, the auxiliary contact is partially located within a recess dimensioned to allow the auxiliary contact to move within it.

Preferably, the auxiliary contact is provided with two contact plates, each moveable within a respective recess.

Preferably, the auxiliary contact is provided with a u-shaped portion which is dimensioned to receive a portion of the arm.

Preferably, a movable contact is fixed to the moveable magnet, such that the moveable magnet does not press directly against the fixed contact, but instead presses the moveable contact against the fixed contact.

Preferably, an insulating layer is provided between the movable magnet and the fixed contact.

Preferably, the safety switch is one of a plurality of safety switches, provided as a single block.

A specific embodiment of the invention will now be described by way of example only, with reference to the accompanying drawings in which:
Figure 1 is a perspective view of a safety switch which embodies the invention;
Figure 2 is a perspective view of a contact arm which forms part of the safety switch shown in Figure 1;
Figure 3 is a perspective view of the safety switch of Figure 1 in an alternative configuration;
Figure 4 is a perspective view of the safety switch provided with auxiliary conducting plates;
Figure 5 is a perspective view and a side view of an auxiliary contact switch;
Figure 6 is a perspective view of the safety switch of Figure 1, further comprising the auxiliary contact switch;
Figure 7 is a perspective view of the safety switch of Figure 6 in an alternative configuration; and
Figure 8 is a perspective view of several safety switches provided together as a single entity.

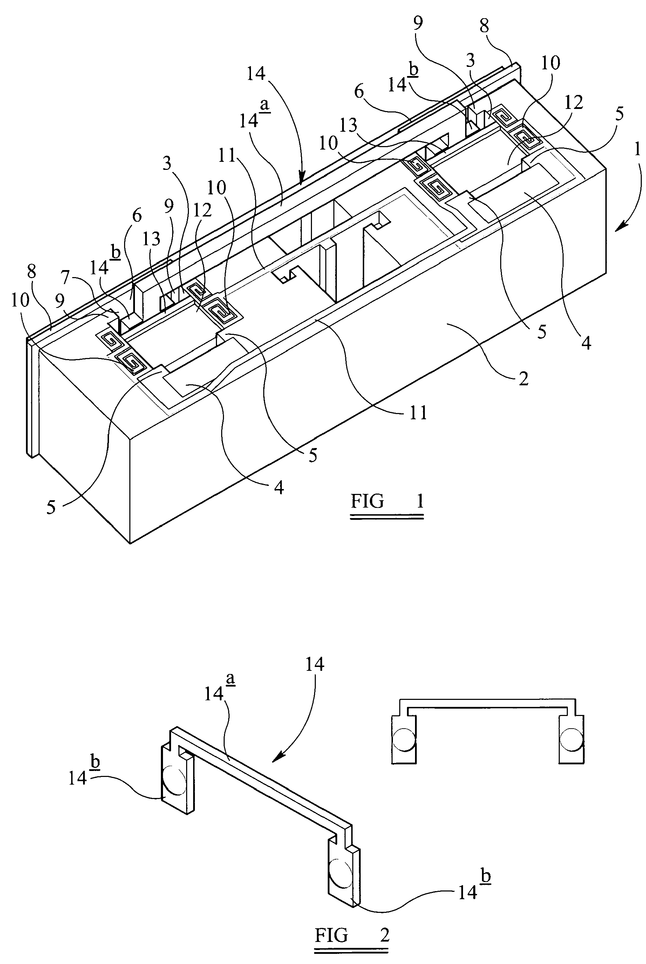

Referring to Figure 1 a safety switch, generally indicated as 1, comprises a silicon block 2 provided with recesses 3 which are configured to be able to receive components of the safety switch.

A magnet 4 is located at one side of each recess 3. Each recess 3 is provided with ridges 5, which hold the magnet 4 securely in place. The magnet 4 will hereafter be referred to as the fixed magnet 4. An electrical contact 6 is located at an opposite end of each recess 3. The contact 6 comprises a conducting plate 7 which is connected to an arm 8. The conducting plate 7 is securely held in the recess 3 by ridges 9 of the recess. The arm 8 extends along an upper surface of the silicon block 2, and down sides of the silicon block. The contact 6 will hereafter be referred to as the fixed contact 6.

Electrical coils 10 are provided at either side of each recess 3. The coils 10 are connected via electrical connectors 11 to a power supply (not shown). The coils are fabricated by printing them onto, or etching them into, the silicon block 2.

An additional magnet 12 is located in a central region of the recess 3. The magnet 12 is thinner than the central portion of the recess 3, so that it is moveable within the recess. This magnet will hereafter be referred to as the moveable magnet 12. The moveable magnet 12 is moveable towards and away from the plate 7 of the fixed contact 6, and towards and away from the fixed magnet 4. A face of the movable magnet 12 which is adjacent the plate 7 of the fixed contact 6 is provided with a layer of insulation 13. The insulation may comprise for example plastics or ceramic.

A contact arm generally indicated as 14 is shown schematically in Figure 2. The contact arm 14 comprises an arm portion 14a and contact plates 14b. The contact plates 14b of the contact arm 14 are received in the recesses 3. Referring to Figure 1, each contact plate 14b is located between the plate 7 of a fixed contact 6 and a movable magnet 12. The contact plates 14b are either magnets or are fabricated from ferromagnetic material (for example iron or steel). The contact plates 14b are thus fixed to the movable magnets 12. The contact plates 14b are not in electrical contact with the movable magnets 12, due to the presence of the insulation layer 13.

In use, the power supply connected via the connectors 11 to the coils 10 forms part of a safety circuit. The safety circuit may, for example, be connected to a lock on a door which is used to access dangerous electromechanical machinery. The safety circuit may be arranged such that power is supplied to the coils 10 only when the door is closed. In this example, the fixed contacts 6 may be connected to a power supply of the electromechanical machinery, such that when the contact arm 14 presses against the plates 7 of the fixed contacts 6, power is supplied to the electromechanical machinery.

In Figure 1, no power is supplied to the coils 10 (in this example the door of the electromechanical machinery is open), and the movable magnets 12 are pulled back towards the fixed magnets 4, such that the contact plates 14b of the contact arm 14 are held away from the plates 7 of the fixed contacts 6. No power is supplied to the electromechanical machinery, and the electromechanical machinery cannot operate.

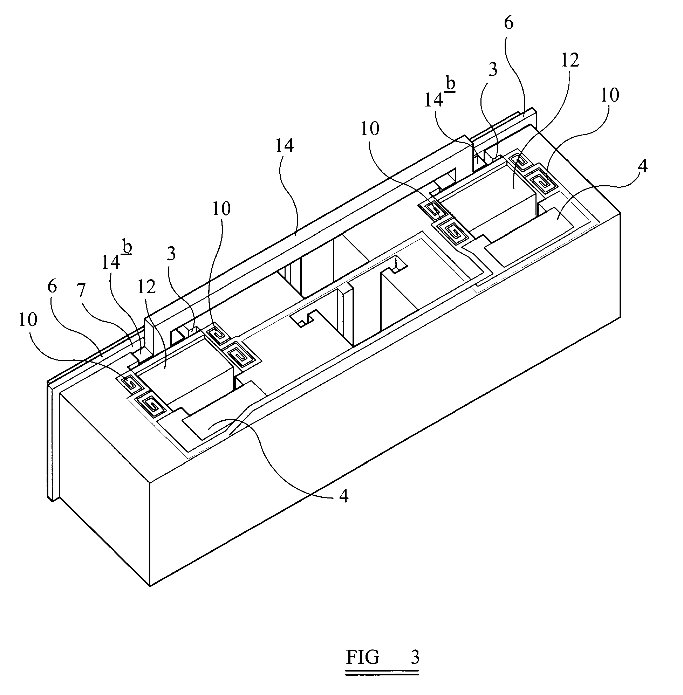

Figure 3 illustrates the situation in which the coils 10 are energised (in this example the door of the electromechanical machinery is closed). The movable magnets 12 are pushed forwards by the coils 10 towards the plates 7 of the fixed contacts 6 (the force exerted by the coils 10 is greater than the force exerted by the fixed magnets 4). The coils 10 lift the moveable magnets 12 slightly upwards, so that the movable magnets do not drag along bottom surfaces of the recesses 3. The moveable magnets 12 push the contact plates 14b of the contact arm 14 against the plates 7 of the fixed contacts 6, thereby forming a connection which allows power to be supplied to the electromechanical machinery. In this way, the electromechanical machinery is able to operate only when the door to the electromechanical machinery is closed.

Because the safety switch 1 is electrically operated instead of being mechanically operated, it does not need to be located on the lock on the door which is used to access dangerous electromechanical machinery. Instead, it can be located well away from the electromechanical machinery, and therefore can be kept away from vibrations caused by the electromechanical machinery, which otherwise might cause damage to the safety switch. An additional advantage of the safety switch is that it does not need to be mechanically coupled to the lock, thereby allowing a more simple lock to be used.

In some instances it may be desired to provide one or more auxiliary contacts, which operate substantially simultaneously with the contact arm 14. For this reason, the embodiment of the invention may be provided with an additional contact mechanism.

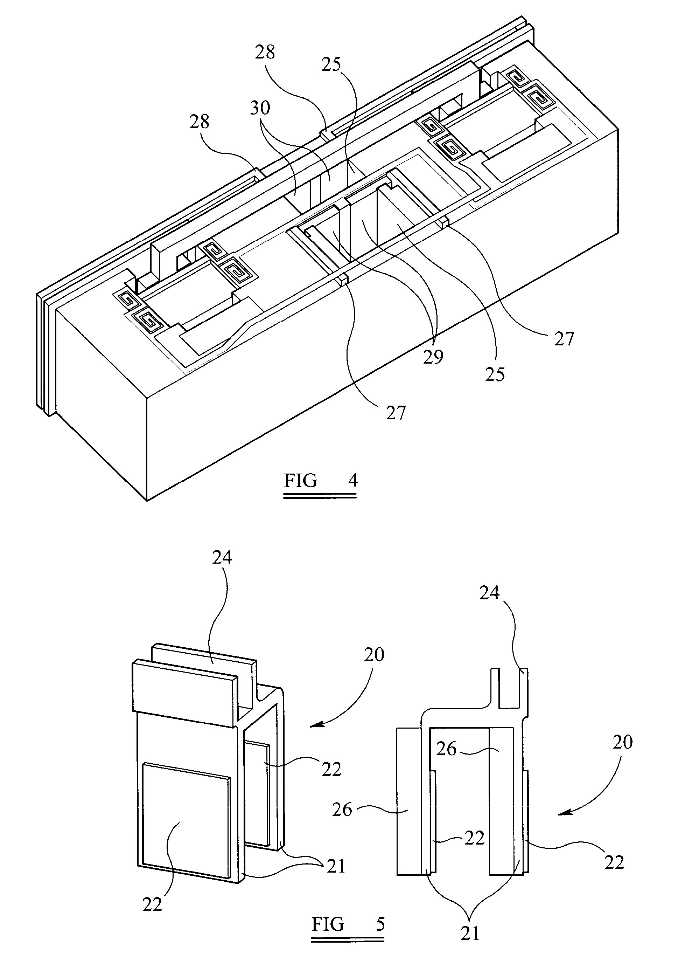

Figure 4 shows a safety switch which includes all of the features illustrated in Figures 1 to 3, and which is provided with additional recesses 25 to receive an auxiliary contact switch. The additional recesses 25 are each dimensioned to receive a leg of an auxiliary contact switch. Electrical connectors 27, 28 pass from sides of the silicon block to auxiliary conducting plates 29, 30 located within the additional recesses 25.

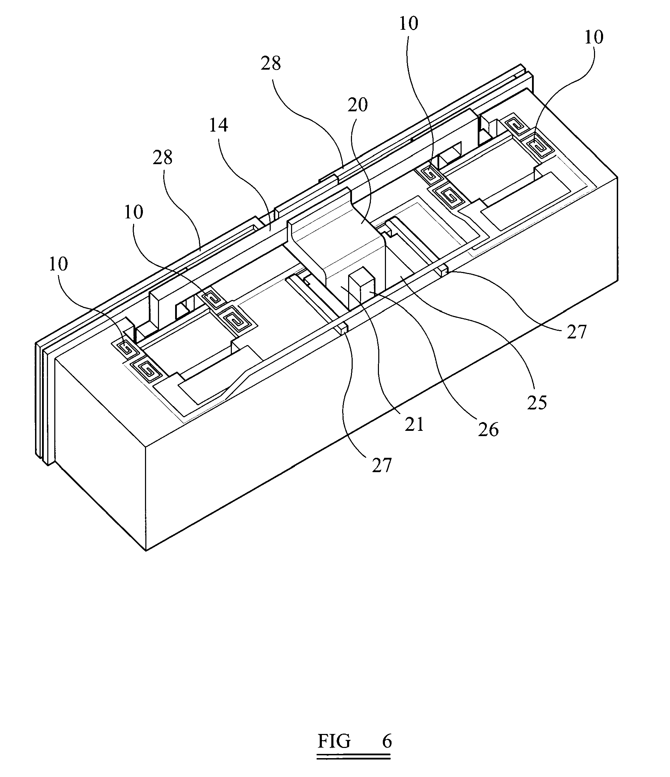

Figure 5 shows a perspective view and a side view of an auxiliary contact switch generally indicated as 20. The auxiliary contact switch 20 comprises an n-shaped member with two legs 21, each leg 21 being provided with a conducting plate 22. A u-shaped portion 24 is provided on top of the n-shaped member 21.

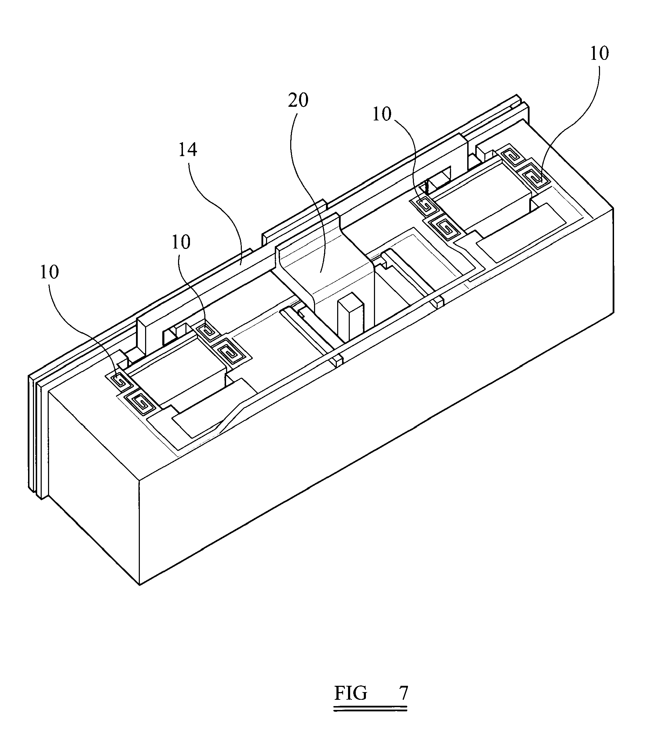

Figure 6 shows the auxiliary contact switch 20 with its legs 21 located within the recesses. Each leg 21 is thinner than the additional recess 25 in which it is located, so that the auxiliary contact is moveable within the additional recesses 25. A ridge 26 is provided on the back of each leg 21 to restrict the range of movement of the auxiliary contact 21 so that it corresponds to the range of movement of the contact arm 14. The contact arm 14 is securely received in the U-shaped portion 24 of the auxiliary contact switch 20.

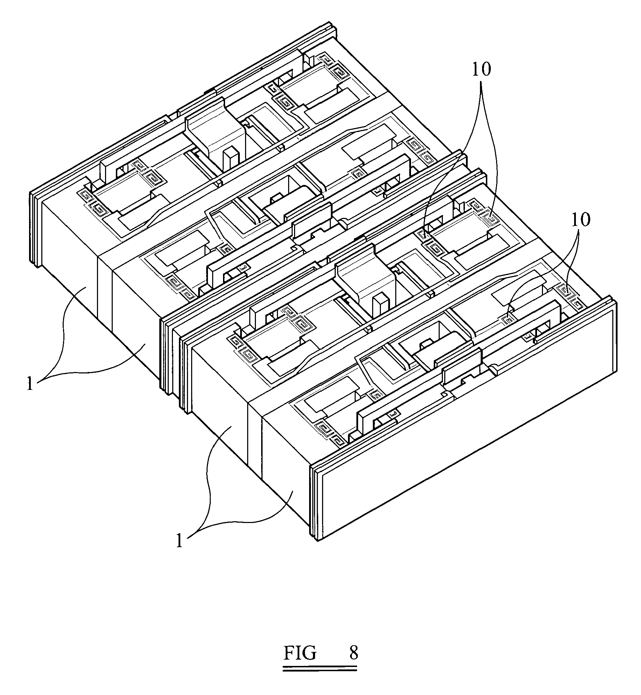

In use, when the coils 10 are not energised, the contact arm 14 pushes the auxiliary contact switch 20 back, such that the conducting plates 22 are held away from the auxiliary conducting plates 29, 30. This is the configuration shown in Figure 6. Referring to Figure 7, when the coils 10 are energised, the contact arm 14 is pushed forwards, and this pulls the auxiliary contact switch 20 forwards such that the conducting plates press against the auxiliary conducting plates 29, 30. In this way, the auxiliary contact circuits are formed. The auxiliary contact switch 20 may be used for example to activate a warning light which indicates that electromechanical machinery is operating, and/or other warning devices.

In an embodiment of the invention, the auxiliary contact switch may be modified so that it provides a warning if the safety switch is not operating correctly. For example, the conducting plate 22 provided on each leg 21 of the auxiliary contact switch 20 may be split into a left hand plate and a right hand plate. The left hand plates may be connected together, and similarly the right hand plates may be connected together. The electrical 27, 28 may be connected to the conducting plates 29, 30 such that a closed circuit is formed by the left hand plates when the auxiliary contact switch 20 is pushed forwards, and similarly a closed circuit is formed by the right hand plates. It is possible that one of the contact plates 14b of the contact arm 14 may become fused to a plate 7 of a fixed contact 6, such that the contact plate does not move away from the plate of the fixed contact when the coils 10 are turned off. This would cause the contact arm to skew (one end of the contact arm moving whilst the other end is fixed). The modified auxiliary contact switch 20 will indicate that the fusing has occurred, since it will be skewed along with the contact arm such that a closed circuit will be formed by the left hand plates of the auxiliary contact switch and an open circuit will be provided at the right hand plates (or vice-versa, depending upon where the fusing occurred). This is advantageous because it provides an immediate warning that one of the contact plates 14b has fused. It may be desired to make the auxiliary contact switch 20 wider, and move the left hand and right hand plates further apart, such that the effect of skewed movement is more pronounced and more likely to provide the combination of a closed circuit and an open circuit.

In an embodiment of the invention, a plurality of safety switches may be provided together as a single entity. For example, referring to Figure 8, four safety switches 1 are provided as a single unit. The coils 10 of each of the safety switches 1 may be connected to the same input, with the fixed contacts 6 each being connected to different outputs. A unit of this type may be used for example when more than one piece of electromechanical machinery is being powered, the pieces of electromechanical machinery all being located within the same enclosure. The door of the enclosure may be connected to the coils 10 of each of the safety switches 1, so that when the door of the enclosure is opened, the power supply to each piece of electromechanical machinery is interrupted via the fixed contacts 6.

Various magnets have been referred to in the above description. It will be appreciated by those skilled in the art that where appropriate the term 'magnet' includes ferromagnetic substances that are not magnetised. For example, the fixed magnets 4 may comprise steel or iron which is not magnetised, with the moveable magnets 12 being steel or iron which is magnetised (or vice versa).

Although the illustrated embodiment of the invention includes two moveable magnets 12 which are connected by a contact arm 4, it will be appreciated that the invention may be implemented using only one moveable magnet, and without a contact arm.

For example, the contact arm may be replaced with a contact (the contact could for example be connected to a power supply for electromechanical machinery).

Although the illustrated embodiment of the invention includes a contact plate 14b which is fixed to a moveable magnet, it will be appreciated that the moveable magnet itself may form a contact plate (the moveable magnet being electrically connected to for example a power supply circuit).

No dimensions have been marked onto the figures. In one embodiment, the silicon block 2 may be 8x15mm with a depth of 1-2 mm.

The illustrated embodiment of the invention includes coils fabricated by printing them onto, or etching them into, the silicon block 2. However, it will be appreciated that the coils may instead comprise conventional windings.

It will be appreciated by those skilled in the art that the materials used to fabricate the embodiment of the invention may be replaced with other suitable materials. For example, the block 2 may be formed from plastics instead of silicon.

## Claims

1. A safety switch for a safety circuit, the safety switch comprising a moveable magnet moveably located between a fixed contact and a fixed magnet, wherein the safety switch further comprises coils located adjacent to the moveable magnet, the coils being arranged such that when they are energised they push the moveable magnet towards the fixed contact such that the movable magnet presses against the fixed contact, and the fixed magnet being arranged such that when the coils are not energised the moveable magnet is pulled away from the fixed contact.

2. A safety switch according to claim 1, wherein the safety switch comprises a block provided with a recess which receives the moveable magnet, the fixed magnet and the moveable contact.

3. A safety switch according to claim 2, wherein the recess is provided with ridges which are arranged to secure the fixed contact and the fixed magnet in place.

4. A safety switch according to claim 2 or claim 3, wherein the recess is dimensioned to allow the moveable magnet to move within the recess.

5. A safety switch according any preceding claim, wherein the safety switch further comprises a second moveable magnet, a second fixed contact, a second fixed magnet, and second coils, having the same configuration as claimed in any of the preceding claims, wherein the safety switch further comprises an arm which connects the first and second moveable contacts.

6. A safety switch according to claim 5, wherein the safety switch further comprises an auxiliary contact which is mechanically connected to the arm, and which is moveable between a first configuration in which a contact is made and a second configuration in which no contact is made.

7. A safety switch according to claim 6, wherein the auxiliary contact is partially located within a recess dimensioned to allow the auxiliary contact to move within it.

8. A safety switch according to claim 6 or claim 7, wherein the auxiliary contact is provided with two contact plates, each moveable within a respective recess.

9. A safety switch according to claim 8, wherein the auxiliary contact is provided with four contact plates, a first contact plate located on a given side of the first recess being connected to a second contact plate located on the same side of the second recess, a third contact plate being located on an opposite side of the first recess and connected to a fourth contact plate located on the same side of the second recess.

10. A safety switch according to any of claims 6 to 9, wherein the auxiliary contact is provided with a u-shaped portion which is dimensioned to receive a portion of the arm.

11. A safety switch according to any of claims 1 to 5, wherein a movable contact is fixed to the moveable magnet, such that the moveable magnet does not press directly against the fixed contact, but instead presses the moveable contact against the fixed contact.

12. A safety switch according to claim 11, wherein an insulating layer is provided between the movable magnet and the fixed contact.

13. A safety switch according to any preceding claim, wherein the safety switch is one of a plurality of safety switches, provided as a single block.

14. A safety switch substantially as hereinbefore described with reference to the accompanying figures.
